# EUROPEAN PATENT APPLICATION

(11) **EP 0 656 312 A1**
(43) Date of publication of application: **07.06.1995**
(21) Application number: 93118173.9
(22) Date of filing: 10.11.1993
(51) Int. Cl.: B66C 7/04

(54) **A device for hanging travelling rails**

(71) Applicant: Kabushiki Kaisha Kito, Nakakoma-gun Yamanashi (JP)
(72) Inventor: Yamada, Hiroshi, Kofu-shi, Yamanashi (JP)
(74) Representative: Haecker, Walter

(57) **Abstract**

A travelling rail hanging device comprising a pair of longitudinal travelling rails (1) and a transverse travelling rail (2). The longitudinal travelling rails (1) are supported from, for example, a ceiling via connecting members (3) having eyenut at the opposed ends thereof. Free running trolleys (5) are arranged in the longitudinal travelling rails, and the transverse travelling rail (2) is swingingly supported by the longitudinal travelling rails (1). A free running trolley (7) for hanging a hoist is arranged on the transverse travelling rail (2).

## Description

### BACKGROUND OF THE INVENTION

### 1. Field of the Invention

The present invention relates to a device for hanging travelling rails.

### 2. Description of the Related Art

In a known crane, the crane comprises a pair of stationary longitudinal travelling rails extending in parallel to each other, a movable transverse travelling rail supported at the opposed ends thereof by the longitudinal travelling rails, and a hoist movably hung on the transverse travelling rail. Each of the longitudinal travelling rails has a trolley which is moved along the longitudinal travelling rail by a motor, and the opposed ends of the transverse travelling rail are rotatably and slidably supported by the corresponding trolleys (Japanese Examined Patent Publication No. 50-33291).

As mentioned above, in this crane, the trolleys are driven by motors. However, there is a requirement for a crane in which a hoist can be manually moved to a target position. In this required crane, the motor driven trolleys cannot be used, and free running trolleys are used.

In a crane such that a hoist can be manually moved to a target position, the most important point resides in how smoothly and easily a hoist can be manually moved to a target position.

### SUMMARY OF THE INVENTION

An object of the present invention is to provide a travelling rail hanging device capable of smoothly and easily moving a load such as a hoist, by a manual operation, to a target position.

According to the present invention, there is provided a device for hanging travelling rails comprising: a pair of longitudinal travelling rails substantially horizontally extending in parallel to each other; a pair of at least two connecting members normally vertically extending above the corresponding longitudinal travelling rails for hanging the corresponding longitudinal travelling rails, each connecting member having an upper end which is loosely coupled to a fixed member via a first flexible joint and having a lower end which is loosely coupled to the corresponding longitudinal travelling rails via a second flexible joint; a pair of first free running trolleys each supported by the corresponding longitudinal travelling rail to travel in a longitudinal direction of the corresponding longitudinal travelling rail; a transverse travelling rail substantially horizontally extending in a transverse direction with respect to the longitudinal travelling rails below the longitudinal travelling rails and pivotally connected to the first free running trolleys; and a second free running trolley for hanging a load, the second free running trolley being supported by the transverse travelling rail to travel in a longitudinal direction of the transverse travelling rail.

The present invention may be more fully understood from the description of the preferred embodiment of the invention set forth below, together with the accompanying drawings.

### BRIEF DESCRIPTION OF THE DRAWINGS

In the drawings:
Fig. 1 is a schematically illustrated perspective view of a travelling rail hanging device;
Fig. 2 is a schematically illustrated plan view of the travelling rail hanging device;
Fig. 3 is a front view of the travelling rail hanging device;
Fig. 4 is a partially cross-sectional and enlarged front view of a portion of the travelling rail hanging device, which portion is indicated by A in Fig. 3;
Fig. 5 is a side view of Fig. 4;
Fig. 6 is a partially cross-sectional and enlarged side view of a portion of the travelling rail hanging device, which portion is indicated by B in Fig. 3, looking from the direction of the arrow VI;
Fig. 7A is an enlarged front view of the connecting member;
Fig. 7B is a side view of Fig. 7A;
Fig. 8A is an enlarged front view of another type of the connecting member; and
Fig. 8B is a side view of Fig. 8A.

### DESCRIPTION OF A PREFERRED EMBODIMENT

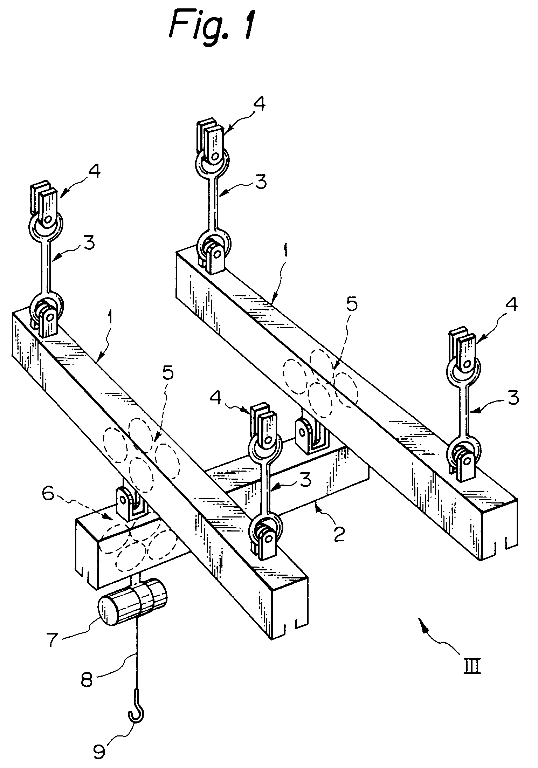

Figure 1 shows a schematically illustrated perspective view of a travelling rail hanging device. Referring to Fig. 1, reference numerals 1 designate a pair of longitudinal travelling rails horizontally extending parallel to each other, and 2 a transverse travelling rail horizontally extending beneath the longitudinal travelling rails 1 normally at a right angle with respect to the longitudinal travelling rails 1. The opposed ends of both the longitudinal travelling rails 1 are supported via corresponding connecting members 3 by support members 4 which are fixed to a ceiling or a stationary beam. First free running trolleys 5 having four wheels, shown by broken lines, are arranged in the longitudinal travelling rails 1 so that they can freely move in the longitudinal directions of the corresponding longitudinal travelling rails 1.

The opposed ends of the transverse travelling rail 2 are supported by the corresponding first free running trolleys 5 so that they can rotate about the vertical axes. A second free running trolley 6 having four wheels shown in the broken line is arranged in the transverse travelling rail 2 so that it can freely move in the longitudinal direction of the transverse travelling rail 2. A hoist 7 having a chain 8 and a hook 9 is supported by the second free running trolley 6. If, for example, the hook 9 is manually pulled in a given horizontal direction, the first free running trolleys 5, i.e., the transverse travelling rail 2 and the second free running trolley 6 move in that direction, and therefore, the hook 9 can be moved to an any target position.

As can be seen from Fig. 1, all the connecting members 3 have the same shape, and all the free running trolleys 5 and 6 have the same construction. In addition, the longitudinal travelling rails 1 and the transverse travelling rail 2 have the same cross-section.

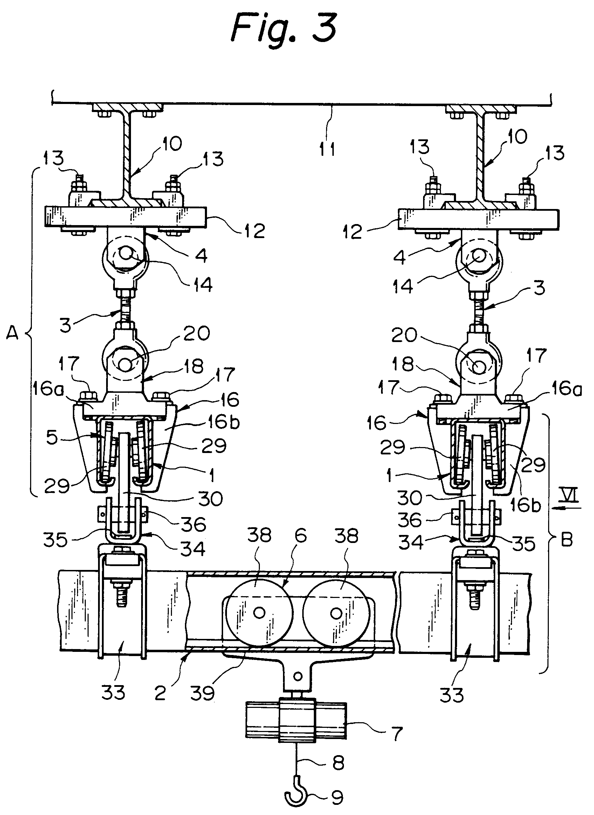

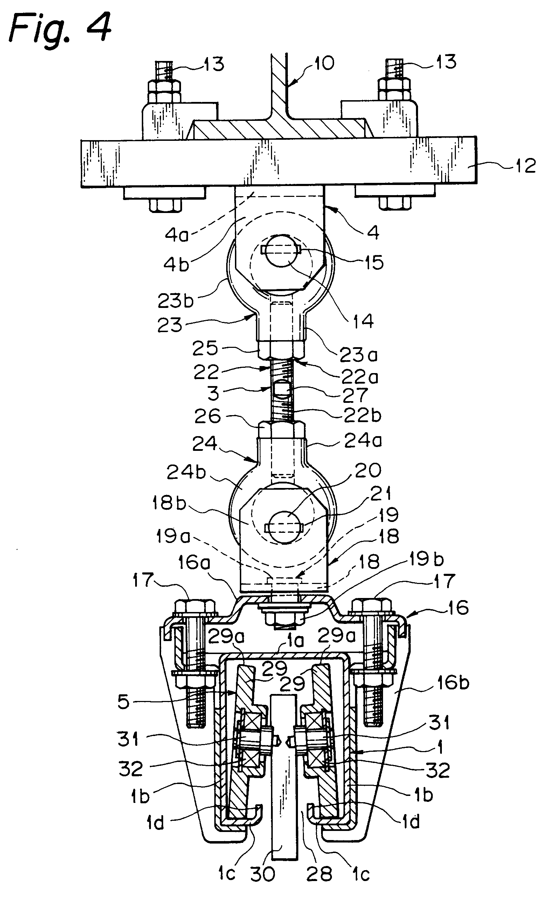

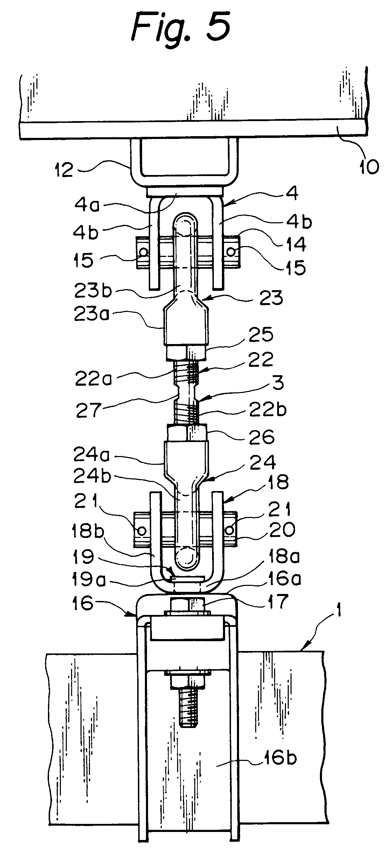

Referring to Figures 3 through 5, a pair of I beams 10 are fixed to a ceiling or a stationary beam 11, and horizontal members 12 are fixed to the lower faces of the I beams 10 by bolts 13. The support members 4 comprise a base portion 4a and a pair of side walls 4b extending downward from the opposed ends of the base portion 4a, as illustrated in Figs. 4 and 5, and thus have a U-shaped cross-section. The base portions 4a of the support members 4 are welded to the lower faces of the corresponding horizontal members 12. A cylindrical support pin 14 is fitted into the bores formed in the side walls 4b so that it extends horizontally, and lock pins 15 are fitted into the outwardly projecting ends of the support pin 14.

Rail clamps 16 are attached to the longitudinal travelling rails 1 at positions beneath the corresponding support members 4. Each clamp 16 comprises an upper clamp member 16a and a lower clamp member 16b which are fastened to the longitudinal travelling rail 1 by bolts 17. In addition, support members 18 are mounded on the upper clamp members 16a. Each support member 18 comprises a base portion 18a and a pair of side walls 18b extending upward from the opposed ends of the base portion 18a, as illustrated in Figs. 4 and 5, and thus has a U-shaped cross-section. The base portions 18a of the support members 18 are pivotally connected to the corresponding upper clamp members 16a by corresponding pivot pins 19 which have an enlarged top 19a and a nut 19b screwed onto the lower end thereof. A cylindrical support pin 20 is fitted into the bores formed in the side walls 18b so that it extends horizontally, and lock pins 21 are fitted into the outwardly projecting ends of the support pin 20.

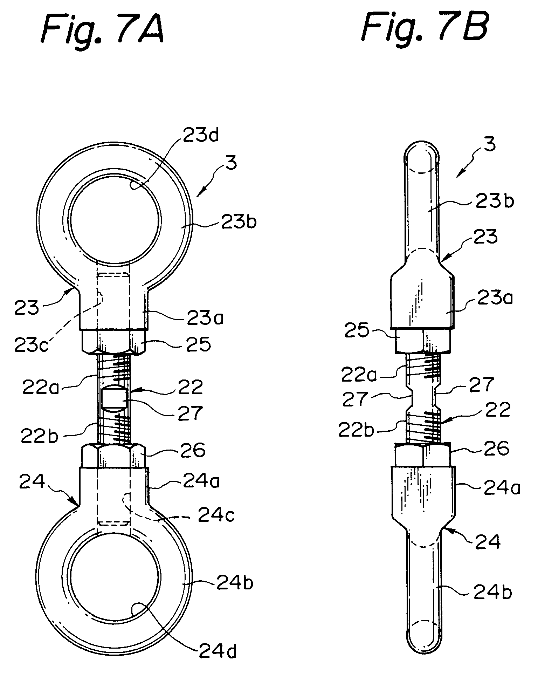

As illustrated in Figs. 3, 4, 5, 7A and 7B, each connecting member 3 comprises a threaded rod 22, an upper eyenut 23 and a lower eyenut 24. The threaded rod 22 has an upper threaded portion 22a and a lower threaded portion 22b which is threaded in a direction which is opposite to the threaded direction of the upper threaded portion 22a. The upper eyenut 23 comprises a base portion 23a and a ring portion 23b. The base portion 23a has therein an inner threaded bore 23c (Fig. 7A) into which the threaded portion 22a of the threaded rod 22 is screwed. The ring portion 23b has a cylindrical cross-section and has a circular shape opening 23d having an inner diameter which is larger than the outer diameter of the support pin 14. In addition, as illustrated in Fig. 5, the ring portion 23b has a thickness which is smaller than the distance between the side walls 4b of the support member 4.

As mentioned above, the ring portion 23b of the upper eyenut 23 has a cylindrical cross-section, and the support pin 14 also has a cylindrical cross-section. Accordingly, the ring portion 23b is point-contacted with the support pin 14. In addition, since the thickness of the ring portion 23b is smaller than the distance between the side walls 4b of the support member 4, the connecting member 3 is able to swing in all directions with respect to the support member 4. Accordingly, the upper eyenut 23 and the support pin 4 constructs a flexible joint with a point contact.

Similarly, the lower eyenut 24 comprises a base portion 24a and a ring portion 24b. The base portion 24a has therein an inner threaded bore 24c (Fig. 7A) into which the threaded portion 22b of the threaded rod 22 is screwed. The ring portion 24b has a cylindrical cross-section and has a circular shape opening 24d having an inner diameter which is larger than the outer diameter of the support pin 20. In addition, as illustrated in Fig. 5, the ring portion 24b has a thickness which is smaller than the distance between the side walls 18b of the support member 18.

As mentioned above, the ring portion 24b of the lower eyenut 24 has a cylindrical cross-section, and the support pin 20 also has a cylindrical cross-section. Accordingly, the ring portion 24b is point-contacted with the support pin 20. In addition, since the thickness of the ring portion 24b is smaller than the distance between the side walls 18b of the support member 18, the connecting member 3 is able to swing in all directions with respect to the support member 18. Accordingly, the lower eyenut 24 and the support pin 20 also constructs a flexible joint with a point contact.

Lock nuts 25 and 26 are screwed into the threaded portions 22a and 22b of the threaded rod 22, respectively, and the threaded rod 22 has a pair of cut away portions 27 for receiving a wrench therein. The distance between the upper eyenut 23 and the lower eyenut 24 can be adjusted by rotating the threaded rod 22 with the wrench. After the completion of the adjustment, the upper eyenut 23 and the lower eyenut 24 are firmly fixed to the corresponding threaded portions 22a and 22b of the threaded rod 22 by the lock nuts 25 and 26.

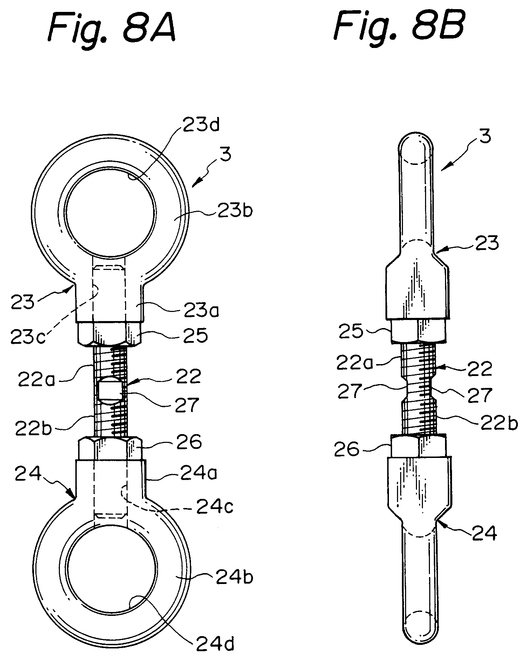

Instead of using the connecting member 3 shown in Figs. 7A and 7B, the connecting member 3 shown in Figs. 8A and 8b may be used. In the connecting member 3 illustrated in Figs. 8A and 8B, the threaded portions 22a and 22b of the threaded rod 22 are threaded in the same direction.

Referring to Fig. 4, the longitudinal travelling rail 1 has, in general, a rectangular cross-section with a slot 28 at the lower face thereof and comprises a horizontally extending flat top wall 1a, a pair of vertical side walls 1b extending downward from the opposed sides of the top wall 1a, a pair of flat flange portions 1c extending horizontally inward from the lower ends of the corresponding side walls 1b, and a pair of end portions 1d projecting upward from the inner ends of the corresponding flange portions 1c and defining the slot 28 therebetween.

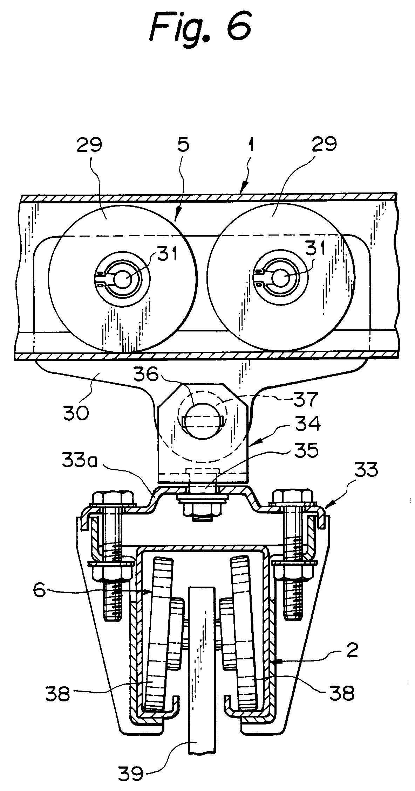

As shown in Figs. 4 and 6, the first free running trolley 5 comprises four wheels 29, and a hanging plate 30 for hanging the transverse travelling rail 2. The four wheels 29 comprise two pairs of the two wheels 29 facing with each other. The wheels 29 are rotatably supported by corresponding shafts 31 via bearings 32, and the shafts 31 of each pair of the two wheels 29 are obliquely fixed to the opposed side faces of the hanging plate 30 by welding so that the wheels 29 is inclined with respect to the vertical plane, and that the distance between the upper portions of the wheels 29 is smaller than the distance between the lower portions of the wheels 29. In addition, each wheel 29 has a conical shaped circumferential outer wall 29a so that the outer wall 29a contacts the flange portion 1c over the entire width thereof.

Since the wheels 29 are inclined as mentioned above, when a torque about a vertical axis acts on the hanging plate 30, only the lower ends of the outer faces of the wheels 29 come into contact with the side walls 1b of the longitudinal travelling rail 1. Accordingly, even if such a torque acts on the hanging plate 30, there is no danger that the rolling motion of the wheels 29 is blocked by the side wall 1b, and thus the first free running trolley 5 is able to smoothly travel in the longitudinal travelling rail 1.

As can be seen from Figs. 3, 4, and 6, the transverse travelling rail 2 has a cross-sectional shape which is the same as that of the longitudinal travelling rail 1, and the rail clamps 33 attached to the transverse travelling rail 2 have a construction which is the same as that of the rail clamps 16 attached to the longitudinal travelling rail 1. In addition, support members 34 pivotally connected to the upper clamp members 33a of the corresponding rail clamps 33 via corresponding pivot pins 35 have a construction which is the same as that of the support members 18 connected the rail clamps 16. Namely, each support member 34 has a U-shape and is equipped with a support pin 36 having a shape which is the same as that of the support pin 20 of the support member 18. Each support pin 36 is loosely fitted into a cylinder bore 37 (Fig. 6) formed in the lower portion of the hanging plate 30. Furthermore, each pivot pin 35 has a construction which is the same as that of the pivot pin 19 (Fig. 4).

In addition, the second free running trolley 6 arranged in the transverse travelling rail 2 has a construction which is the same as that of the first free running trolleys 5 arranged in the longitudinal travelling rails 1. Accordingly, the second free running trolley 6 has four inclined wheels 38 and a hanging plate 39 having a shape which is the same as that of the hanging plates 30 of the first free running trolleys 5. As illustrated in Fig. 3, the hoist 7 is hung on the lower portion of the hanging plate 39.

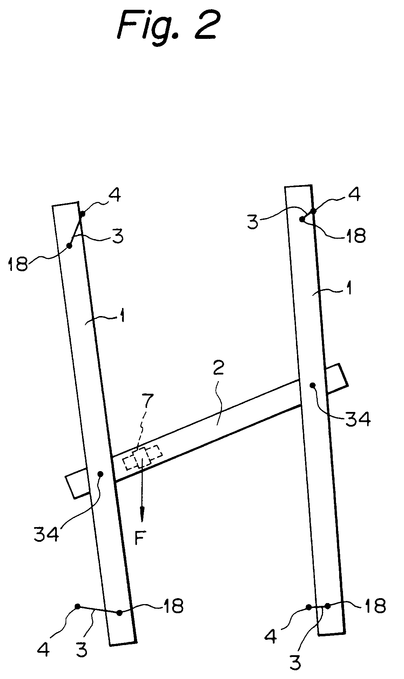

Figure 2 shows a schematically illustrated plan view of the travelling rail hanging device in case where a force F acts on the hoist 7 to move the position of the hook 9 (Fig. 1) of the hoist 7. At this time, since the longitudinal travelling rails 1 are temporarily swung as illustrated in Fig. 2, and the transverse travelling rail 2 is temporarily swung with respect to the longitudinal travelling rails 2, the free running trolleys 5 and 6 smoothly travel in the corresponding travelling rails 1 and 2 in the direction of the force F. Accordingly, it is possible to smoothly move the hook 9 of the hoist 7 to a target position by an extremely small force. After the completion of the movement of the hoist 7, the positional relationship between the travelling rails 1 and 2 is returned again to a regular positional relationship such that the longitudinal travelling rails 1 are parallel to each other, and the transverse travelling rail 2 extends approximately at a right angle with respect to the longitudinal travelling rails 1, as illustrated in Fig. 1.

In the embodiment 1, only two connecting members 3 are used for hanging each longitudinal travelling rail 1. However, more than two connecting members 3 may be used for hanging each longitudinal travelling rail 1. In addition, instead of hanging the hoist 7 on the second free running trolley 6, it is possible to hang any other load, such as an electric drilling machine, on the trolley 6.

While the invention has been described by reference to a specific embodiment chosen for purposes of illustration, it should be apparent that numerous modifications could be made thereto by those skilled in the art without departing from the basic concept and scope of the invention.

## Claims

1. A device for hanging travelling rails comprises:
a pair of longitudinal travelling rails substantially horizontally extending parallel to each other;
a pair of at least two connecting members normally vertically extending above said corresponding longitudinal travelling rails for hanging said corresponding longitudinal travelling rails, each of said connecting member having an upper end which is loosely coupled to a fixed member via a first flexible joint and having a lower end which is loosely coupled to said corresponding longitudinal travelling rails via a second flexible joint;
a pair of first free running trolleys each supported by said corresponding longitudinal travelling rail to travel in the longitudinal direction of said corresponding longitudinal travelling rail;
a transverse travelling rail substantially horizontally extending in a transverse direction with respect to said longitudinal travelling rails below said longitudinal travelling rails and pivotally connected to said first free running trolleys; and
a second free sunning trolley for hanging a load, said second free running trolley being supported by said transverse travelling rail to travel in a longitudinal direction of said transverse travelling rail.

2. A device according to claim 1, wherein said first flexible joint and said second flexible joint are a point-contact type flexible joint.

3. A device according to claim 1, further comprising a pair of at least two first support members which are fixed to said fixed member and have a substantially horizontally extending cylindrical support pin, and a pair of at least two second support members which are mounted on said longitudinal travelling rails and having a substantially horizontally extending cylindrical support pin, each of said connecting member having a first ring portion and a second ring portion which are formed at the upper end and the lower end thereof, respectively, said first and second ring portions having a cylindrical cross-section and having an opening formed therein, said first flexible joints being formed by said first ring portions and said support pins of said first support members, which are inserted into said openings of said corresponding first ring portions, said second flexible joints being formed by said second ring portions and said support pins of said second support members, which are inserted into said openings of said corresponding second ring portions.

4. A device according to claim 3, wherein each of said connecting members comprises: a rod having a first threaded portion and a second threaded portion which are formed on at least an upper end portion and a lower end portion thereof, respectively; a first eyenut having said first ring portion and screwed into said first threaded portion; and a second eyenut having said second ring portion and screwed into said second threaded portion.

5. A device according to claim 4, wherein the threaded direction of said first threaded portion is opposite to that of said second threaded portion.

6. A device according to claim 4, wherein the threaded direction of said first threaded portion is the same as that of said second threaded portion.

7. A device according to claim 3, wherein said second support members are pivotally connected to said longitudinal travelling rails via pivot pins and are rotatable about a vertical axis.

8. A device according to claim 1, further comprising support members which are pivotally connected to said transverse travelling rail via pivot pins and are rotatable about a vertical axis, said support members being connected to said corresponding first free running trolleys.

9. A device according to claim 8, wherein each of said first free running trolleys comprises a hanging plate extending downward from said longitudinal travelling rail and having a cylindrical bore, and each of said support members has a horizontally extending cylindrical support pin which is inserted into said cylindrical bore.

10. A device according to claim 1, wherein said longitudinal travelling rails and said transverse travelling rail comprise an upper wall, a pair of side walls extending downward from opposed sides of said upper wall, and a pair of horizontal flat flange portions extending inward from lower ends of said side walls, and said first free running trolleys and said second free running trolley comprises at least two pairs of wheels, each pair of said wheels rolling on said corresponding flange portions and being inclined so that the distance between upper portions of said wheels is smaller than the distance between lower portions of said wheels.

11. A device according to claim 10, wherein each of said wheels has a conical shaped outer circumferential wall rolling on said corresponding flange portion.

12. A device according to claim 10, wherein said side walls extend vertically straight.

13. A device according to claim 10, wherein said first free running trolleys and said second free running trolley comprise a hanging plate extending downward from said corresponding travelling rail, and shafts rotatably supporting said corresponding wheels and obliquely fixed to said corresponding hanging plate, said hanging plates of said first free running trolleys being connected to said transverse travelling rail, said hanging plate of said second free running trolley being used for hanging said load.

14. A device according to claim 13, wherein said longitudinal travelling rails and said transverse travelling rail comprise end portions extending upward from inner ends of said flange portions and defining a slot therebetween, and said hanging plates extend through said corresponding slots.
